# EUROPEAN PATENT APPLICATION

(11) **EP 4 628 207 A1**
(43) Date of publication of application: **08.10.2025**
(21) Application number: 23897369.7
(22) Date of filing: 02.11.2023
(51) Int. Cl.: B01J 21/18, B01J 35/60, B01J 35/77, C25B 11/052, C25B 11/075, H01M 4/90, H01M 8/10, H01M 12/06, H01M 12/08

(54) **CARBON CATALYST, ELECTRODE, AND BATTERY**

(30) Priority: 29.11.2022 JP 2022189814
(71) Applicant: Nisshinbo Holdings Inc., Tokyo 103-8650 (JP); National University Corporation Gunma University, Maebashi-shi, Gunma 371-8510 (JP)
(72) Inventor: KUBOTA, Yuji, Chiba-shi, Chiba 267-0056 (JP); MAIE, Takuya, Chiba-shi, Chiba 267-0056 (JP); OZAKI, Jun-ichi, Maebashi-shi, Gunma 371-8510 (JP); KAMEYAMA, Rieko, Maebashi-shi, Gunma 371-8510 (JP); ISHII, Takafumi, Maebashi-shi, Gunma 371-8510 (JP)
(74) Representative: Vossius & Partner Patentanwälte Rechtsanwälte mbB
(86) International application number: PCT/JP2023/039592
(87) International publication number: WO 2024/116714

(57) **Abstract**

Provided are a carbon catalyst that exhibits high catalytic activity while effectively avoiding problems caused by iron, an electrode, and a battery. The carbon catalyst has a ratio L/La of an average carbon network plane size L, which is obtained by temperature programmed desorption analysis capable of heating to 1,600°C, to a crystallite size La, which is obtained from a diffraction peak in a vicinity of a diffraction angle (2θ) of 43° in an X-ray diffraction pattern obtained by powder X-ray diffraction using a CuKα ray, of 12 or more, and the carbon catalyst has an iron content of 3,000 ppm or less.

## Description

### Technical Field

The present invention relates to a carbon catalyst, an electrode, and a battery.

### Background Art

In Patent Literature 1, there is a description of an oxygen reduction catalyst which includes composite particles having dispersed particles of a titanium compound in a carbon structure, where the composite particles contain titanium, iron, carbon, nitrogen, and oxygen as constituent elements.

### Citation List

### Patent Literature

[PTL 1] JP 2016-123894 A

### Summary of Invention

### Technical Problem

Meanwhile, it has not yet been sufficiently clarified what carbon structure improves the catalytic activity of a carbon material. In addition, it has been found that when a catalyst including iron is used for an electrode of a fuel cell, defects occur due to the leakage of iron from the catalyst.

The present invention has been made in view of the above-mentioned problems, and one of the objects of the present invention is to provide a carbon catalyst that exhibits high catalytic activity while effectively avoiding the problems caused by iron, an electrode, and a battery.

### Solution to Problem

[1] In order to achieve the above-mentioned object, according to one embodiment of the present invention, there is provided a carbon catalyst having a ratio L/La of an average carbon network plane size L, which is obtained by temperature programmed desorption analysis capable of heating to 1,600°C, to a crystallite size La, which is obtained from a diffraction peak in a vicinity of a diffraction angle (2θ) of 43° in an X-ray diffraction pattern obtained by powder X-ray diffraction using a CuKα ray, of 12 or more, the carbon catalyst having an iron content of 3,000 ppm or less. According to the embodiment of the present invention, there is provided a carbon catalyst that exhibits high catalytic activity while effectively avoiding the problems caused by iron.
[2] In the carbon catalyst according to the above-mentioned item [1], the crystallite size La may be 10.00 nm or less. [3] In the carbon catalyst according to the above-mentioned item [1] or [2], the average carbon network plane size L may be 5 nm or more.
[4] The carbon catalyst according to any one of the above-mentioned items [1] to [3] may include a nitrogen atom. [5] The carbon catalyst according to any one of the above-mentioned items [1] to [4] may have a ratio of a nitrogen atom concentration to a carbon atom concentration, which is obtained by X-ray photoelectron spectroscopy, of 0.0005 or more.
[6] The carbon catalyst according to any one of the above-mentioned items [1] to [5] may have a BET specific surface area of 100 m²/g or more. [7] The carbon catalyst according to any one of the above-mentioned items [1] to [6] may have a micropore volume of 0.05 cm³/g or more. [8] The carbon catalyst according to any one of the above-mentioned items [1] to [7] may have a micropore volume of 2.50 cm³/g or less. [9] The carbon catalyst according to any one of the above-mentioned items [1] to [8] may have a mesopore volume of 0.001 cm³/g or more. [10] The carbon catalyst according to any one of the above-mentioned items [1] to [9] may include a non-noble metal other than iron.
[11] In order to achieve the above-mentioned object, according to one embodiment of the present invention, there is provided an electrode including the carbon catalyst according to any one of the above-mentioned items [1] to [10]. According to the embodiment of the present invention, there is provided an electrode that exhibits high catalytic activity while effectively avoiding the problems caused by iron.
[12] In order to achieve the above-mentioned object, according to one embodiment of the present invention, there is provided a battery including the electrode according to the above-mentioned item [11]. According to the embodiment of the present invention, there is provided a battery including the electrode that exhibits high catalytic activity while effectively avoiding the problems caused by iron.

### Advantageous Effects of Invention

According to the present invention, a carbon catalyst that exhibits high catalytic activity while effectively avoiding the problems caused by iron, an electrode, and a battery, are provided.

### Brief Description of Drawings

FIG. 1 is an explanatory view for a coronene model regarding an average carbon network plane size L.
FIG. 2 is an explanatory diagram showing evaluation results of the characteristics of carbon catalysts in Examples according to an embodiment of the present invention.

### Description of Embodiments

One of the embodiments of the present invention will be described below. The present invention is not limited to examples described in the embodiment.

A carbon catalyst according to an embodiment of the present invention (hereinafter referred to as "catalyst of the present invention") is a carbon material which exhibits catalytic activity. The catalyst of the present invention mainly includes carbon. Specifically, the carbon content of the catalyst of the present invention may be, for example, 70 wt% or more, preferably 75 wt% or more, more preferably 80 wt% or more, particularly preferably 85 wt% or more. The carbon content of the catalyst of the present invention may be, for example, 100 wt% or less, 95 wt% or less, or 90 wt% or less. The carbon content of the catalyst of the present invention may be specified by arbitrarily combining any one of the above-mentioned lower limit values and any one of the above-mentioned upper limit values. The carbon content of the carbon catalyst is obtained by elemental analysis (combustion method).

The catalyst of the present invention itself exhibits catalytic activity alone. That is, the catalyst of the present invention exhibits catalytic activity without including a noble metal supported thereon. The catalytic activity to be exhibited by the catalyst of the present invention is, for example, reduction reaction catalytic activity and/or oxidation reaction catalytic activity, more specifically oxygen reduction reaction catalytic activity and/or hydrogen oxidation reaction catalytic activity, and at least oxygen reduction reaction catalytic activity.

The iron content of the catalyst of the present invention may be, for example, 3,000 ppm or less, preferably 2,000 ppm or less, more preferably 1,000 ppm or less, still more preferably 500 ppm or less, still more preferably 300 ppm or less, still more preferably 200 ppm or less, still more preferably 100 ppm or less, particularly preferably 50 ppm or less. 1 ppm means 0.0001 wt%. The iron content is obtained by inductively coupled plasma (ICP) atomic emission spectroscopy.

In the case where the iron content of the catalyst of the present invention falls within the above-mentioned ranges, even when the catalyst of the present invention is used as an electrode catalyst of a fuel cell, for example, the occurrence of defects caused by iron can be effectively avoided.

The inventors of the present invention have intensively investigated technical means for improving the catalytic activity of a carbon catalyst while effectively avoiding the problems caused by iron, and as a result, have uniquely found that a carbon catalyst having a carbon structure in which a ratio L/La of an average carbon network plane size L to a crystallite size La falls within a predetermined range exhibits high catalytic activity. Thus, the inventors have completed the present invention.

That is, the catalyst of the present invention has a ratio L/La of an average carbon network plane size L, which is obtained by temperature programmed desorption analysis capable of heating to 1,600°C, to a crystallite size La, which is obtained from a diffraction peak in a vicinity of a diffraction angle (2θ) of 43° in an X-ray diffraction pattern obtained by powder X-ray diffraction using a CuKα ray, of 12 or more.

The ratio L/La of the catalyst of the present invention is preferably 13 or more, particularly preferably 14 or more. The upper limit value of the ratio L/La of the catalyst of the present invention is not particularly limited as long as the effects of the present invention are obtained. The upper limit value may be, for example, 12,500 or less, 10,000 or less, 5,000 or less, 1,000 or less, 700 or less, 500 or less, 300 or less, 200 or less, or 100 or less. The ratio L/La of the catalyst of the present invention may be specified by arbitrarily combining any one of the above-mentioned lower limit values and any one of the above-mentioned upper limit values.

The ratio L/La falling within the above-mentioned ranges contributes to improvement in catalytic activity of the catalyst of the present invention. That is, when the ratio L/La is equal to or higher than the above-mentioned lower limit value, for example, the carbon structure of the catalyst of the present invention includes a structure with appropriate planarity. Accordingly, an active structure included in the carbon structure is effectively increased. As a result, the catalytic activity of the catalyst of the present invention is effectively improved. Meanwhile, when the ratio L/La is equal to or lower than the above-mentioned upper limit value, for example, a conductive path of electrons is effectively formed in the carbon structure, and hence the catalytic activity of the catalyst of the present invention is more effectively improved.

The crystallite size La of the carbon catalyst is obtained from the diffraction peak in the vicinity of a diffraction angle (2θ) of 43° in the X-ray diffraction pattern of the carbon catalyst obtained by powder X-ray diffraction using a CuKα ray. When the carbon catalyst has a structure in which carbon hexagonal network planes are connected to extend in an a-axis direction, among crystallites forming curved carbon network planes that contribute to its catalytic activity, a (10) diffraction line (hereinafter referred to as "diffraction peak f₁₀") of carbon having a peak top in the vicinity of a diffraction angle (2θ) of 43° (e.g., within the range of from 35° to 60°) appears in the X-ray diffraction pattern using a CuKα ray.

Then, the crystallite size La is calculated by analyzing the diffraction peak f₁₀. That is, the crystallite size La is calculated by substituting the Bragg angle and full width at half maximum of the diffraction peak f₁₀ into the following Scherrer equation: La=Kλ/(βcosθ). In the Scherrer equation, K represents a Scherrer constant (0.94), λ represents the wavelength of the CuKα ray (0.15418 nm), β represents the full width at half maximum (radian), and θ represents the Bragg angle (radian).

The crystallite size La of the catalyst of the present invention is not particularly limited as long as the effects of the present invention are obtained. The crystallite size La may be, for example, 10.00 nm or less, preferably 5.00 nm or less, more preferably 3.00 nm or less, still more preferably 2.50 nm or less, still more preferably 2.40 nm or less, still more preferably 2.35 nm or less, still more preferably 2.30 nm or less, still more preferably 2.25 nm or less, still more preferably 2.20 nm or less, and particularly preferably 2.15 nm or less.

The crystallite size La of the catalyst of the present invention may be, for example, 0.40 nm or more, 0.70 mm or more, 1.00 nm or more, 1.10 nm or more, 1.15 nm or more, 1.20 nm or more, 1.23 nm or more, or 1.25 nm or more. The crystallite size La of the catalyst of the present invention may be specified by arbitrarily combining any one of the above-mentioned lower limit values and any one of the above-mentioned upper limit values.

The crystallite size La falling within the above-mentioned ranges contributes to improvement in catalytic activity of the catalyst of the present invention. That is, when the crystallite size La is too large, the carbon structure extends excessively in the a-axis direction, and a problem may occur in that the active structure included in the carbon structure is excessively reduced. In contrast, when the crystallite size La is equal to or smaller than the above-mentioned upper limit value, the extending of the carbon structure in the a-axis direction is appropriately suppressed, and hence the active structure included in the carbon structure is effectively increased. As a result, the catalytic activity of the catalyst of the present invention is effectively improved. Meanwhile, when the crystallite size La is too small, the crystallinity of the carbon structure in the a-axis direction is too low. Accordingly, the carbon structure has a disordered structure. As a result, a problem may occur in that the conductive path of electrons is hardly formed in the carbon structure. In contrast, when the crystallite size La is equal to or larger than the above-mentioned lower limit value, the conductive path of electrons is effectively formed in the carbon structure, and hence the catalytic activity of the catalyst of the present invention is more effectively improved.

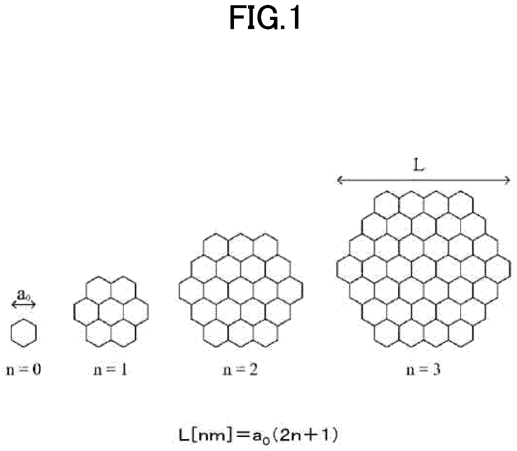

The average carbon network plane size L of the carbon catalyst is obtained by temperature programmed desorption (TPD) analysis capable of heating to 1,600°C of the carbon catalyst. That is, in the embodiment of the present invention, from the results of desorbed gas quantitative determination of high-temperature TPD of the carbon catalyst with a temperature programmed desorption analyzer (high-temperature TPD analyzer) capable of heating to 1,600°C, a total amount of carbon edge planes of the carbon catalyst is calculated, and the average carbon network plane size L obtained from the total amount is calculated with a coronene model shown in FIG. 1. In the equation shown in FIG. 1, a₀ represents a lattice constant of a graphite crystal in the a-axis direction, which is 0.2461 nm.

The average carbon network plane size L of the catalyst of the present invention is not particularly limited as long as the effects of the present invention are obtained. The average carbon network plane size L may be, for example, 5 nm or more, preferably 10 nm or more, more preferably 15 nm or more, still more preferably 20 nm or more, still more preferably 23 nm or more, still more preferably 25 nm or more, still more preferably 26 nm or more, still more preferably 27 nm or more, still more preferably 28 nm or more, and particularly preferably 29 nm or more.

The average carbon network plane size L of the catalyst of the present invention may be, for example, 5,000 nm or less, 2,000 nm or less, 1,000 nm or less, 500 nm or less, 400 nm or less, 300 nm or less, 200 nm or less, 120 nm or less, 115 nm or less, or 113 nm or less. The average carbon network plane size L of the catalyst of the present invention may be specified by arbitrarily combining any one of the above-mentioned lower limit values and any one of the above-mentioned upper limit values.

The average carbon network plane size L falling within the above-mentioned ranges contributes to improvement in catalytic activity of the catalyst of the present invention. That is, when the average carbon network plane size L is too small, the continuity of the carbon structure is too low. Accordingly, a problem may occur in that the conductive path of electrons is hardly formed in the carbon structure. In contrast, when the average carbon network plane size L is equal to or larger than the above-mentioned lower limit value, the continuity of the carbon structure is improved, and hence the catalytic activity of the catalyst of the present invention is effectively improved. On the other hand, when the average carbon network plane size L is too large, the hexagonal network planes included in the carbon structure are likely to be stacked. Accordingly, the carbon structure has a structure with excessively large planarity. As a result, a problem may occur in that an inactive structure included in the carbon structure is excessively increased. In contrast, when the average carbon network plane size L is equal to or smaller than the above-mentioned upper limit value, the hexagonal network planes in the carbon structure are not excessively stacked, and the inactive structure included in the carbon structure is effectively reduced. Accordingly, the catalytic activity of the catalyst of the present invention is more effectively improved.

The BET specific surface area of the catalyst of the present invention is not particularly limited as long as the effects of the present invention are obtained. The BET specific surface area may be, for example, 100 m²/g or more, preferably 200 m²/g or more, more preferably 300 m²/g or more, still more preferably 400 m²/g or more, still more preferably 500 m²/g or more, still more preferably 600 m²/g or more, still more preferably 650 m²/g or more, and particularly preferably 700 m²/g or more.

The BET specific surface area of the catalyst of the present invention may be, for example, 4,000 m²/g or less, 3,500 m²/g or less, 3,000 m²/g or less, or 2,500 m²/g or less. The BET specific surface area of the catalyst of the present invention may be specified by arbitrarily combining any one of the above-mentioned lower limit values and any one of the above-mentioned upper limit values. The BET specific surface area is obtained by a nitrogen adsorption method.

The BET specific surface area falling within the above-mentioned ranges contributes to improvement in catalytic activity of the catalyst of the present invention. That is, when the BET specific surface area is too small, the carbon structure is densely stacked, and the amount of carbon atoms exposed is small. Accordingly, a problem may occur in that contact between the carbon structure and a reaction active material becomes difficult. In contrast, when the BET specific surface area is equal to or larger than the above-mentioned lower limit value, the carbon structure is effectively brought into contact with the reaction active material, and hence the catalytic activity of the catalyst of the present invention is effectively improved. On the other hand, when the BET specific surface area is too large, the carbon structure has a disordered structure. Accordingly, a problem may occur in that the conductive path of electrons is hardly formed in the carbon structure. In contrast, when the BET specific surface area is equal to or smaller than the above-mentioned upper limit value, the conductive path of electrons is effectively formed in the carbon structure. Accordingly, the catalytic activity of the catalyst of the present invention is more effectively improved.

The micropore volume of the catalyst of the present invention is not particularly limited as long as the effects of the present invention are obtained. The micropore volume may be, for example, 0.05 cm³/g or more, preferably 0.07 cm³/g or more, more preferably 0.10 cm³/g or more, still more preferably 0.15 cm³/g or more, still more preferably 0.20 cm³/g or more, still more preferably 0.25 cm³/g or more, still more preferably 0.30 cm³/g or more, and particularly preferably 0.35 cm³/g or more.

The micropore volume of the catalyst of the present invention may be, for example, 2.50 cm³/g or less, and is preferably 2.00 cm³/g or less, more preferably **1.50** cm³/g or less, still more preferably 1.40 cm³/g or less, still more preferably **1.30** cm³/g or less, still more preferably **1.20** cm³/g or less, still more preferably 1.15 cm³/g or less, still more preferably 1.10 cm³/g or less, still more preferably **1.05** cm³/g or less, still more preferably **1.00** cm³/g or less, and particularly preferably 0.95 cm³/g or less. The micropore volume of the catalyst of the present invention may be specified by arbitrarily combining any one of the above-mentioned lower limit values and any one of the above-mentioned upper limit values.

In the embodiment of the present invention, the micropores are pores each having a diameter of less than 2 nm, and the micropore volume is the total volume of the micropores included in the catalyst of the present invention. The micropore volume is obtained by a nitrogen adsorption method.

The micropore volume falling within the above-mentioned ranges contributes to improvement in catalytic activity of the catalyst of the present invention. That is, when the micropore volume is too small, the carbon structure is densely stacked, and the amount of carbon atoms exposed is small. Accordingly, a problem may occur in that contact between the carbon structure and a reaction active material is difficult. In contrast, when the micropore volume is equal to or larger than the above-mentioned lower limit value, the carbon structure is effectively brought into contact with the reaction active material, and hence the catalytic activity of the catalyst of the present invention is effectively improved. On the other hand, when the micropore volume is too large, the carbon structure has a disordered structure. Accordingly, a problem may occur in that the conductive path of electrons is hardly formed in the carbon structure. In contrast, when the micropore volume is equal to or smaller than the above-mentioned upper limit value, the conductive path of electrons is effectively formed in the carbon structure. Accordingly, the catalytic activity of the catalyst of the present invention is more effectively improved.

The mesopore volume of the catalyst of the present invention is not particularly limited as long as the effects of the present invention are obtained. The mesopore volume may be, for example, 0.001 cm³/g or more, 0.005 cm³/g or more, may be 0.01 cm³/g or more, and is preferably 0.05 cm³/g or more, particularly preferably 0.06 cm³/g or more.

The mesopore volume of the catalyst of the present invention may be, for example, 5.00 cm³/g or less, and is preferably 4.00 cm³/g or less, more preferably 3.00 cm³/g or less, still more preferably 2.00 cm³/g or less, still more preferably 1.70 cm³/g or less, still more preferably 1.60 cm³/g or less, still more preferably 1.50 cm³/g or less, still more preferably 1.45 cm³/g or less, and particularly preferably 1.43 cm³/g or less. The mesopore volume of the catalyst of the present invention may be specified by arbitrarily combining any one of the above-mentioned lower limit values and any one of the above-mentioned upper limit values.

In the embodiment of the present invention, the mesopores are pores each having a diameter of 2 nm or more and 50 nm or less, and the mesopore volume is the total volume of the mesopores included in the catalyst of the present invention. The mesopore volume is obtained by a nitrogen adsorption method.

The mesopore volume falling within the above-mentioned ranges contributes to improvement in catalytic activity of the catalyst of the present invention. That is, when the mesopore volume is too small, the transportation of a substance with a size of about several tens of nanometers that enters and exits the carbon structure (e.g., water and/or an ion-exchange substance) is prevented. Accordingly, a problem may occur in that the catalytic reaction is inhibited. In contrast, when the mesopore volume is equal to or larger than the above-mentioned lower limit value, the transportation of the substance to the carbon structure is smoothly performed, and hence the catalytic activity is effectively improved. On the other hand, when the mesopore volume is too large, the volume of the carbon structure becomes too large, and a problem may occur in that the catalytic activity with respect to a constant volume of the carbon catalyst is significantly reduced. In contrast, when the mesopore volume is equal to or smaller than the above-mentioned upper limit value, the catalytic activity with respect to the constant volume is effectively maintained. Accordingly, the catalytic activity of the catalyst of the present invention is more effectively improved.

The catalyst of the present invention preferably includes a nitrogen atom. That is, in this case, the catalyst of the present invention includes, for example, a nitrogen atom doped into the carbon structure. Specifically, the ratio (hereinafter referred to as "N/C ratio") of the nitrogen atom concentration (at%) to the carbon atom concentration (at%) obtained by X-ray photoelectron spectroscopy (XPS) of the catalyst of the present invention may be, for example, 0.0005 or more, preferably 0.0007 or more, 0.0010 or more, preferably 0.0020 or more, more preferably 0.0030 or more, still more preferably 0.0040 or more, still more preferably 0.0050 or more, and particularly preferably 0.0055 or more.

The N/C ratio of the catalyst of the present invention may be, for example, 0.2000 or less, 0.1000 or less, 0.0500 or less, 0.0400 or less, 0.0300 or less, 0.0200 or less, or 0.0150 or less. The N/C ratio of the catalyst of the present invention may be specified by arbitrarily combining any one of the above-mentioned lower limit values and any one of the above-mentioned upper limit values.

The N/C ratio falling within the above-mentioned ranges contributes to improvement in catalytic activity of the catalyst of the present invention. That is, when the N/C ratio is too small, the amount of nitrogen included in the carbon structure is small, and the electron doping effect from nitrogen to carbon is small. As a result, a problem may occur in that the catalytic activity is not sufficiently improved. In contrast, when the N/C ratio is equal to or larger than the above-mentioned lower limit value, the electron doping effect from nitrogen to carbon is obtained, and hence the catalytic activity of the catalyst of the present invention is effectively improved. Meanwhile, when the N/C ratio is too large, the carbon structure becomes disordered. Accordingly, a problem may occur in that the conductive path of electrons is hardly formed in the carbon structure. In contrast, when the N/C ratio is equal to or smaller than the above-mentioned upper limit value, the conductive path of electrons is effectively formed in the carbon structure. Accordingly, the catalytic activity of the catalyst of the present invention is more effectively improved.

The catalyst of the present invention may include a non-noble metal other than iron. Herein, the non-noble metal is a metal other than noble metals. The noble metal is ruthenium (Ru), palladium (Pd), rhodium (Rh), silver (Ag), osmium (Os), iridium (Ir), platinum (Pt), or gold (Au).

The non-noble metal to be included in the catalyst of the present invention is not particularly limited as long as the effects of the present invention are obtained. The non-noble metal may be, for example, a non-noble metal belonging to Groups II to XIV in the periodic table of elements, and preferably a non-noble metal belonging to the third to fifth periods of Groups II to XIV in the periodic table.

Specifically, the non-noble metal to be included in the catalyst of the present invention is, for example, more preferably one or more kinds selected from the group consisting of: magnesium (Mg); aluminum (Al); calcium (Ca); titanium (Ti); manganese (Mn); cobalt (Co); nickel (Ni); copper (Cu); zinc (Zn); yttrium (Y); zirconium (Zr); niobium (Nb); molybdenum (Mo); and tin (Sn), particularly preferably one or more selected from the group consisting of: Mg; Al; Ca; Cu; Zn; Y; Zr; Mo; and Sn.

The content of the non-noble metal other than iron of the catalyst of the present invention (when the catalyst of the present invention includes a plurality of non-noble metals, the content is the total content of the plurality of non-noble metals) may be, for example, 50 ppm or more, 100 ppm or more, 1,000 ppm or more, 10,000 ppm or more, or 100,000 ppm or more. The content of the non-noble metal other than iron of the catalyst of the present invention may be, for example, 500,000 ppm or less, 400,000 ppm or less, 300,000 ppm or less, or 200,000 ppm or less. The content of the non-noble metal other than iron of the catalyst of the present invention may be specified by arbitrarily combining any one of the above-mentioned lower limit values and any one of the above-mentioned upper limit values. The content of the non-noble metal is obtained by inductively coupled plasma (ICP) atomic emission spectroscopy.

The non-noble metal other than iron to be included in the catalyst of the present invention contributes to improvement in catalytic activity of the catalyst of the present invention. That is, when the catalyst of the present invention includes, for example, a non-noble metal other than iron derived from a raw material for carbonization described below, a specific carbon structure having a catalytic active site can be effectively formed by the carbonization in the presence of the non-noble metal.

When the catalyst of the present invention includes a non-noble metal derived from a raw material for carbonization described below, the catalyst of the present invention includes the non-noble metal due to the non-noble metal being included in the raw material for carbonization. In this case, the catalyst of the present invention includes the non-noble metal inside a skeleton forming a porous structure of the catalyst. Even when the catalyst of the present invention is a carbonized material produced through carbonization followed by metal removal treatment described below, the non-noble metal derived from the raw material for carbonization remains inside the skeleton of the catalyst of the present invention. The weight of the non-noble metal included inside the skeleton of the catalyst of the present invention, out of the non-noble metals included in the catalyst of the present invention, may be larger than the weight of the non-noble metal included in the surface of the skeleton of the catalyst of the present invention.

The non-noble metal inside the skeleton of the catalyst of the present invention may be detected by, for example, subjecting the skeleton to surface etching treatment and analyzing a cross-section exposed by the etching treatment. That is, in this case, when one particle of the catalyst of the present invention is subjected to etching treatment, the non-noble metal is detected in a cross-section of the particle exposed by the etching treatment. The non-noble metal included in the catalyst of the present invention may be detected by, for example, inductively coupled plasma (ICP) atomic emission spectroscopy of the catalyst of the present invention.

A carbon material forming the catalyst of the present invention is preferably a carbonized material obtained by carbonizing a raw material containing an organic substance as described below. In this regard, when the catalyst of the present invention is a carbonized material obtained by carbonizing a raw material containing an organic substance and a non-noble metal other than iron, the carbon structure of the catalyst of the present invention includes the non-noble metal. However, it is conceivable that the catalytic activity of the catalyst of the present invention is mainly based on an active site included in the carbon structure itself rather than the non-noble metal. This is supported by the following fact. Even when the catalyst of the present invention including the non-noble metal derived from the raw material for carbonization is subjected to metal removal treatment for reducing the content of the non-noble metal, the catalytic activity of the catalyst of the present invention after the metal removal treatment is not largely reduced compared to that before the metal removal treatment.

The catalyst of the present invention may be free of any noble metal. That is, as described above, the catalyst of the present invention itself exhibits catalytic activity without including a noble metal supported thereon, and hence it is not necessary that the catalyst include a noble metal. However, the catalyst of the present invention may be used as a carbon carrier for supporting a metal catalyst such as a noble metal.

When the catalyst of the present invention includes the non-noble metal other than iron, the content of a metal other than Mg, Al, Ca, Ti, Mn, Co, Ni, Cu, Zn, Y, Zr, Nb, Mo, and Sn of the catalyst of the present invention, or the content of a metal other than Mg, Al, Ca, Cu, Zn, Y, Zr, Mo, and Sn, may be, for example, 3,000 ppm or less, 2,000 ppm or less, 1,000 ppm or less, 500 ppm or less, 300 ppm or less, 200 ppm or less, 100 ppm or less, or 50 ppm or less.

A method of producing the catalyst of the present invention is not particularly limited as long as the method is capable of providing the catalyst of the present invention having the above-mentioned characteristics. The method is preferably a method including carbonizing a raw material containing an organic substance, for example. The organic substance included in the raw material is not particularly limited as long as the organic substance can be carbonized. An organic compound included in the organic substance may be a polymer **(e.g.,** a thermosetting resin and/or a thermoplastic resin), and/or may be an organic compound having a smaller molecular weight.

Specific examples of the organic substance may include one or more selected from the group consisting of: polyacrylonitrile; a polyacrylonitrile-polyacrylic acid copolymer; a polyacrylonitrile-polymethyl acrylate copolymer; a polyacrylonitrile-polymethacrylic acid copolymer; a polyacrylonitrile-polymethacrylic acid-polymethallyl sulfonic acid copolymer; a polyacrylonitrile-polymethyl methacrylate copolymer; a phenol resin; polyfurfuryl alcohol; furan; a furan resin; a phenol formaldehyde resin; melamine; a melamine resin; an epoxy resin; a nitrogen-containing chelate resin **(e.g.,** one or more selected from the group consisting of: a polyamine-type resin; an iminodiacetic acid-type resin; an amino phosphoric acid-type resin; and an aminomethylphosphonic acid-type resin); a polyamide imide resin; pyrrole; polypyrrole; polyvinylpyrrole; 3-methylpolypyrrole; acrylonitrile; polyvinylidene chloride; thiophene; oxazole; thiazole; pyrazole; vinylpyridine; polyvinylpyridine; pyridazine; pyrimidine; piperazine; pyrane; morpholine; imidazole; 1-methylimidazole; 2-methylimidazole; quinoxaline; aniline; polyaniline; succinic acid dihydrazide; adipic acid dihydrazide; polysulfone; polyaminobismaleimide; polyimide; polyvinyl alcohol; polyvinyl butyral; benzimidazole; polybenzimidazole; polyamide; polyester; polylactic acid; polyether; polyether ether ketone; cellulose; carboxymethyl cellulose; lignin; chitin; chitosan; pitch; silk; wool; polyamino acid; a nucleic acid; DNA; RNA; hydrazine; hydrazide; urea; salen; polycarbazole; polybismaleimide; triazine; polyacrylic acid; a polyacrylic acid ester; a polymethacrylic acid ester; polymethacrylic acid; polyurethane; polyamidoamine; polycarbodiimide; naphthalene; a naphthalene analog; anthracene; an anthracene analog; hydroxybenzene; a hydroxybenzene analog; carbazole; quinoline; cyanuric acid; naphthoic acid; methylene blue; and phthalocyanine.

The organic substance is preferably a nitrogen-containing organic substance. The nitrogen-containing organic substance contains, for example, a nitrogen-containing organic compound. The nitrogen-containing organic compound is not particularly limited as long as the organic compound contains a nitrogen atom in its molecule.

The catalyst of the present invention is preferably a carbonized material obtained by carbonizing a raw material containing an organic substance and a non-noble metal. In this case, the catalyst of the present invention may be a carbonized material subjected to metal removal treatment after the carbonization. The metal removal treatment is treatment for reducing the amount of a raw material-derived non-noble metal included in the carbonized material. Specifically, the metal removal treatment preferably involves, for example, washing treatment with an acid and/or electrolytic treatment.

The carbonization is performed by heating the raw material at a temperature at which the organic substance included in the raw material is carbonized. The carbonizing temperature is not particularly limited as long as the raw material is carbonized at the temperature. The carbonizing temperature is, for example, preferably 900°C or more, more preferably 1,000°C or more, still more preferably 1,100°C or more, and particularly preferably 1,200°C or more.

The carbonizing temperature may be, for example, 3,000°C or less, and is preferably 2,500°C or less, more preferably 2,000°C or less, particularly preferably 1,900°C or less. The carbonizing temperature may be specified by arbitrarily combining any one of the above-mentioned lower limit values and any one of the above-mentioned upper limit values. A temperature increase rate up to the carbonizing temperature is not particularly limited, and may be, for example, 0.5°C/min or more and 300°C/min or less. The carbonization is preferably performed in an inert atmosphere such as a nitrogen atmosphere.

The catalyst of the present invention may be a carbon material obtained by further incorporating a non-noble metal to be supported on a carbonized material obtained by carbonizing the raw material containing the organic substance and a non-noble metal. In this case, the catalyst of the present invention includes a first non-noble metal derived from the raw material for carbonization and a second non-noble metal supported on the catalyst after the carbonization. The first non-noble metal and the second non-noble metal may be the same non-noble metal or different non-noble metals.

The first non-noble metal and the second non-noble metal are not particularly limited as long as the effects of the present invention are obtained. For example, the non-noble metals, which are independent of each other, may be non-noble metals belonging to Groups II to XIV in the periodic table, and are preferably non-noble metals belonging to the third to fifth periods of Groups II to XIV in the periodic table.

Specifically, the first non-noble metal and the second non-noble metal are each independently, for example, preferably one or more selected from the group consisting of: Mg; Al; Ca; Ti; Mn; Co; Ni; Cu; Zn; Y; Zr; Nb; Mo; and Sn, particularly preferably one or more selected from the group consisting of: Mg; Al; Ca; Cu; Zn; Y; Zr; Mo; and Sn.

For example, it is preferred that the first non-noble metal be one or more selected from the group consisting of: Mg; Al; Ca; Ti; Mn; Co; Ni; Cu; Zn; and Sn, and the second non-noble metal be one or more selected from the group consisting of: Y; Zr; Nb; and Mo, and it is particularly preferred that the first non-noble metal be one or more selected from the group consisting of: Mg; Al; Ca; Cu; Zn; and Sn, and the second non-noble metal be one or more selected from the group consisting of: Y; Zr; and Mo.

When the catalyst of the present invention includes a specific kind of first non-noble metal (e.g., one selected from the above-mentioned group) and a specific kind of second non-noble metal (e.g., one that is selected from the above-mentioned group and is different from the first non-noble metal) that is different from the first non-noble metal, the weight of the first non-noble metal included inside the skeleton of the catalyst of the present invention may be larger than the weight of the first non-noble metal included in the surface of the skeleton of the catalyst of the present invention, and the weight of the second non-noble metal included in the surface of the skeleton of the catalyst of the present invention may be larger than the weight of the second non-noble metal included inside the skeleton of the catalyst of the present invention.

An electrode according to an embodiment of the present invention (hereinafter referred to as "electrode of the present invention") includes the catalyst of the present invention. That is, the electrode of the present invention may include an electrode base material and the catalyst of the present invention supported on the electrode base material. The electrode of the present invention is preferably a battery electrode. Specifically, the electrode of the present invention is preferably, for example, an electrode for a fuel cell (e.g., a polymer electrolyte fuel cell or a microbial fuel cell), an air cell, a water electrolyzer (e.g., a polymer electrolyte water electrolyzer), a redox flow battery, or a halogen battery.

The electrode of the present invention may be a cathode or an anode, but is preferably a cathode. That is, the electrode of the present invention is a cathode or an anode of a fuel cell, an air cell, a water electrolyzer, a redox flow battery, or a halogen battery, preferably a cathode thereof.

A battery according to an embodiment of the present invention (hereinafter referred to as "battery of the present invention") includes the electrode of the present invention. Specifically, the battery of the present invention is preferably a fuel cell (e.g., a polymer electrolyte fuel cell or a microbial fuel cell), an air cell, a redox flow battery, or a halogen battery including the electrode of the present invention. The battery of the present invention is preferably a membrane electrode assembly (MEA) including the electrode of the present invention.

The battery of the present invention is a battery including the electrode of the present invention as a cathode or an anode, preferably a battery including the electrode of the present invention as a cathode. That is, the battery of the present invention is a fuel cell, an air cell, a redox flow battery, or a halogen battery including the electrode of the present invention as a cathode or an anode, preferably a fuel cell, an air cell, a redox flow battery, or a halogen battery including the electrode of the present invention as a cathode.

Next, specific Examples according to the embodiments of the present invention will be described.

### Examples

### [Example 1]

0.5 g of polyvinylpyridine (PVP) was dissolved in 200 mL of DMF, and 18.03 g of tin(II) chloride (SnCl₂) was further added thereto to prepare a homogeneous solution. The solution was dried under a vacuum at 80°C for 1 day to provide a raw material for carbonization.

The resultant raw material was loaded into a quartz tube, heated to 1,200°C in an image furnace at a rate of 50°C/min in a nitrogen atmosphere, and held at 1,200°C for 1 hour, to perform carbonization.

Subsequently, silicon nitride balls each having a diameter of 10 mm were set in a planetary ball mill (P-7, manufactured by Fritsch Japan Co., Ltd.), and the carbonized material obtained by the carbonization was pulverized with the planetary ball mill.

100 mL of concentrated hydrochloric acid was added to the pulverized carbonized material, and the mixture was heated to reflux for 2 hours. After that, the solution containing the carbonized material was filtered with a filtration membrane, and the carbonized material was washed with distilled water until the filtrate became neutral. The collected carbonized material was dried under a vacuum.

The carbonized material subjected to metal removal treatment as described above was loaded into a quartz tube, heated in an image furnace in a nitrogen atmosphere, and held at 1,200°C for 30 minutes, to perform heat treatment. Thus, a carbon catalyst of Example 1 was obtained.

### [Example 2]

Preparation of a raw material, carbonization of the raw material, and pulverization of the carbonized material obtained were performed in the same manner as in Example 1 described above except that: 0.5 g of cyanuric acid was used instead of PVP; and 10.56 g of zinc(II) chloride (ZnCl₂) was used instead of tin chloride.

20 mL of concentrated hydrochloric acid was added to the pulverized carbonized material, and the mixture was stirred for 30 minutes. After that, the carbonized material was precipitated, and the solution was removed. This treatment was repeated several times, distilled water was then added to the precipitate, and the mixture was stirred. The solution containing the carbonized material was filtered with a filtration membrane, and the carbonized material was washed with distilled water until the filtrate became neutral. The collected carbonized material was dried under a vacuum.

The carbonized material subjected to metal removal treatment as described above was loaded into a quartz tube, heated in an image furnace in a nitrogen atmosphere, and held at 1,200°C for 30 minutes to perform heat treatment. Thus, a carbon catalyst of Example 2 was obtained.

### [Example 3]

A carbon catalyst of Example 3 was obtained in the same manner as in Example 2 described above except that: 0.5 g of polyacrylonitrile (PAN) was used instead of cyanuric acid; and 25.34 g of copper(II) chloride (CuCl₂) was used instead of zinc chloride.

### [Example 4]

A carbon catalyst of Example 4 was obtained in the same manner as in Example 2 described above except that: 0.5 g of polyvinylidene chloride (PVDC) was used instead of cyanuric acid; 34.67 g of copper(II) chloride (CuCl₂) was used instead of zinc chloride; and 20 mL of concentrated nitric acid was used instead of concentrated hydrochloric acid.

### [Example 5]

A carbon catalyst of Example 5 was obtained in the same manner as in Example 3 described above except that 17.94 g of magnesium chloride (MgCl₂·6H₂O) was used instead of copper chloride.

### [Example 6]

A carbon catalyst was obtained in the same manner as in Example 1 described above except that: 0.5 g of PAN was used instead of PVP; and 10.56 g of zinc(II) chloride (ZnCl₂) was used instead of tin chloride. The carbon catalyst was heated to 900°C at a rate of 50°C/min in an ammonia atmosphere and held at 900°C for 1 hour, to perform nitrogen doping treatment.

100 mg of the carbon catalyst after the nitrogen doping treatment was further immersed in 130 mL of an aqueous solution containing 1.3 mg of yttrium chloride (YCl₃·6H₂O). Thus, the carbon catalyst was impregnated with yttrium chloride.

After that, the aqueous solution containing the carbon catalyst and yttrium chloride was dried at 60°C, heated to 1,000°C at a rate of 50°C/min under a hydrogen atmosphere, and held at 1,000°C for 0.5 hour, to perform hydrogen reduction. Thus, a carbon catalyst of Example 6 was obtained.

### [Example 7]

A carbon catalyst of Example 7 was obtained in the same manner as in Example 6 described above except that 1.2 mg of molybdenum chloride (MoCl₅) was used instead of yttrium chloride.

### [Example 8]

A carbon catalyst of Example 8 was obtained in the same manner as in Example 6 described above except that 1.0 mg of zirconium chloride (ZrCl₄) was used instead of yttrium chloride.

### [Example 9]

0.5 g of a novolac-type phenol resin was dissolved in 80 g of acetone, and 11.20 g of copper(II) chloride (CuCl₂) was further added thereto to prepare a homogeneous solution. The solution was dried under a vacuum at 80°C for 1 day, to provide a raw material for carbonization.

The resultant raw material was loaded into a quartz tube, heated to 1,200°C in an image furnace at a rate of 50°C/min in a nitrogen atmosphere, and held at 1,200°C for 1 hour, to perform carbonization.

Subsequently, silicon nitride balls each having a diameter of 10 mm were set in a planetary ball mill (P-7, manufactured by Fritsch Japan Co., Ltd.), and the carbonized material obtained by the carbonization was pulverized with the planetary ball mill.

20 mL of concentrated nitric acid was added to the pulverized carbonized material, and the mixture was stirred for 30 minutes. After that, the carbonized material was precipitated, and the solution was removed. This treatment was repeated several times, distilled water was then added to the precipitate, and the mixture was stirred. The solution containing the carbonized material was filtered with a filtration membrane, and the carbonized material was washed with distilled water until the filtrate became neutral. The collected carbonized material was dried under a vacuum.

The carbonized material subjected to metal removal treatment as described above was loaded into a quartz tube, heated in an image furnace in a nitrogen atmosphere, and held at 1,200°C for 30 minutes, to perform heat treatment. Thus, a carbon catalyst of Example 9 was obtained.

### [Example 10]

1.5 g of naphthoic acid was dissolved in 80 g of acetone, and 23.23 g of aluminum(III) chloride (AlCl₃) and 23.75 g of zinc(II) chloride (ZnCl₂) were further added thereto to prepare a homogeneous solution. The solution was dried under a vacuum at 80°C for 1 day to provide a raw material for carbonization. After that, a carbon catalyst of Example 10 was obtained in the same manner as in Example 9 described above except that 20 mL of nitric acid-hydrofluoric acid (HNO₃:HF=1 mol:1 mol) was used instead of concentrated nitric acid.

### [Example C1]

0.5 g of a novolac-type phenol resin was dissolved in 80 g of acetone, 1.08 g of copper phthalocyanine was further added thereto, and the mixture was ultrasonically stirred for 30 minutes. Subsequently, acetone serving as a solvent was evaporated with a rotary evaporator. After that, the residue was dried under reduced pressure at 70°C overnight to provide a raw material for carbonization.

The resultant raw material was heated to 800°C in an image furnace at a rate of 10°C/min in a nitrogen atmosphere, and held at 800°C for 1 hour, to perform carbonization.

After that, pulverization of the carbonized material and acid washing were performed in the same manner as in Example 2 described above to provide a carbon catalyst of Example C1.

### [Example C2]

A carbon catalyst of Example C2 was obtained in the same manner as in Example 2 described above except that: 0.5 g of carbazole was used instead of cyanuric acid; and 8.50 g of zinc chloride and 8.29 g of aluminum(III) chloride (AlCl₃) were further added thereto in addition to 10.56 g of zinc chloride.

### [Powder X-ray Diffraction]

The carbon catalyst of each of Examples was subjected to powder X-ray diffraction (XRD) measurement with an X-ray powder diffraction analyzer (XRD-6100, manufactured by Rigaku Corporation). A Cukα ray was used as an incident X-ray, a voltage and current applied to an X-ray tube were set to 40 kV and 15 mA, respectively, and a measurement angle range (2θ) was set within the range of from 5° to 90°.

As described above, when the carbon catalyst has a structure in which carbon hexagonal network planes are connected to extend in an a-axis direction, among crystallites forming curved carbon network planes that contribute to its catalytic activity, a diffraction peak f₁₀ that is a (10) diffraction line of carbon having a peak top in the vicinity of a diffraction angle (2θ) of 43° (e.g., within the range of from 35° to 60°) appears in the X-ray diffraction pattern using a CuKα ray. Specifically, in Examples, the diffraction peak f₁₀ was defined as a diffraction peak having a diffraction angle (2θ) of 43.5°±1.0° and a full width at half maximum of 7.5°±6.5°.

Then, the diffraction peak f₁₀ was analyzed, and the crystallite size La was calculated. That is, the crystallite size La was calculated by substituting the Bragg angle and full width at half maximum of the diffraction peak f₁₀ into the following Scherrer equation: La=Kλ/(βcosθ). In the Scherrer equation, K represents a Scherrer constant (0.94), λ represents the wavelength of the CuKα ray (0.15418 nm), β represents the full width at half maximum (radian), and θ represents the Bragg angle (radian).

### [Temperature Programmed Desorption Analysis]

The carbon catalyst of each of Examples was subjected to temperature programmed desorption analysis with a temperature programmed desorption analyzer (high-temperature TPD analyzer) capable of heating to 1,600°C. The high-temperature TPD analyzer is an apparatus capable of heating a graphite crucible serving as a body to be heated to a high temperature of 1,600°C or more through high-frequency electromagnetic induction heating. The details of the high-temperature TPD analyzer are described in the journal Carbon (Takafumi Ishi, Susumu Kashihara, Yasuto Hoshikawa, Jun-ichi Ozaki, Naokatsu Kannari, Kazuyuki Takai, Toshiaki Enoki, Takashi Kyotani, Carbon, Volume 80, December 2014, pages 135-145).

The carbon catalyst was placed in the high-temperature TPD analyzer and heated under a high vacuum of 5×10⁻⁵ Pa or less, and a desorbed gas was measured with a quadrupole mass spectrometer (QMS).

Specifically, first, a graphite crucible was filled with 1 mg of the carbon catalyst and set in a quartz reaction tube attached to the high-temperature TPD analyzer. Subsequently, the inside of the analyzer was evacuated with a turbo-molecular pump to a pressure of 5×10⁻³ Pa, and then heated from room temperature to 1,600°C at a temperature increase rate of 10°C/min. During the heating, a desorbed gas was detected, and a correlation between a temperature (horizontal axis) and a detection intensity (vertical axis) was recorded. Then, the amount of the desorbed gas was determined. That is, the integrated value of the detection intensities (detection intensity area) of the desorbed gas from room temperature, at which heat treatment was started, to the temperature to be determined (1,600°C), was calculated.

Meanwhile, a calibration curve showing a correlation between the desorption amount of the gas and the detection intensity area was formed by using predetermined amounts of a standard gas. In analysis of the desorbed gas from the sample with the QMS, fragment intensity ratios of various gaseous species (H₂, H₂O, CO, CO₂, N₂, HCN, O₂, CH₄, C₂H₆, C₃H₆, and C₃H₈) were investigated and used for qualitative analysis of the desorbed gas, to clearly distinguish the gaseous species with the same mass (species with a mass number of 28 may be CO, N₂, C₂H₄, and the like) included in the desorbed gas. Then, the desorption amount (release amount) of the gas from the carbon catalyst was determined from the detection intensity area obtained by the measurement, and the calibration curve and the fragment intensity ratios. In addition, in order to validate the adequacy of the formed calibration curve, Ketjen black EC600JD (Lion Specialty Chemicals Co., Ltd.) was used for measurement, and it was recognized that the amount of edge hydrogen fell within the range of from 1,000 [µmol/g] to 1,500 [µmol/g].

Herein, the actual size of a carbon network plane forming carbon can be evaluated from the average carbon network plane size L determined from the amount of the edge planes of carbon. In the embodiment of the present invention, from the results of desorbed gas quantitative determination of high-temperature TPD of the carbon catalyst, the total amount of carbon edge planes of the carbon catalyst was calculated, and the average carbon network plane size L determined from the total amount was calculated with a coronene model shown in FIG. 1. In the equation shown in FIG. 1, a₀ represents the lattice constant of a graphite crystal in the a-axis direction, which is 0.2461 nm.

In addition, it is known that a phenolic hydroxy group of an oxygen-containing compound is decomposed in the form of carbon monoxide by heating, and a hydrogen atom derived from the hydroxy group remains at a carbon edge. Accordingly, the hydrogen amount determined by high-temperature TPD may include a contribution of hydrogen derived from the phenolic hydroxy group. Consequently, the phenolic hydroxy group needs to be considered for rigorous calculation of the total amount of the edge planes. For example, both of an ether (-O) and a phenolic hydroxy group (-OH) are functional groups to be desorbed in the form of CO in the vicinity of 700°C. After a phenolic hydroxy group is desorbed in the form of CO, H remains at an edge site. Accordingly, the phenolic hydroxy group is desorbed in the form of CO and then desorbed in the form of H₂ at a temperature of 1,000°C or more. In addition, the phenolic hydroxy group differs from the ether in that two gaseous species (CO and H₂) are desorbed from one functional group. From the desorption of CO observed by TPD analysis, the ether and the phenolic hydroxy group cannot be distinguished. Accordingly, the desorption of CO was classified into two cases: the case in which CO was derived from the ether alone; and the case in which CO was derived from the phenolic hydroxy group alone. In each case, the amount of carbon edge sites, and L, were calculated.

In high-temperature TPD, it was assumed that CO was desorbed from a phenolic hydroxy group or an ether. Possible values of the total amount (N_{edge}) of the edge planes of the carbon catalyst were calculated using two equations described below. When the desorbed CO is all derived from the ether, the N_{edge} amount always has the maximum value. Accordingly, N_{edge}(Max) was calculated from the following equation: N_{edge}(Max) [mol/g]=CO [mol/g]+CO₂ [mol/g]+H₂ [mol/g]×2. In addition, when desorbed CO is all derived from the phenolic hydroxy group, the N_{edge} amount has the minimum value. Accordingly, N_{edge} (Min) was calculated from the following equation: N_{edge}(Min) [mol/g]=CO₂ [mol/g]+H₂ [mol/g]×2. In the equations, CO [mol/g], CO₂ [mol/g], and H₂ [mol/g] are the desorbed gas amounts of carbon monoxide, carbon dioxide, and hydrogen, respectively, determined by high-temperature TPD.

On the other hand, the average carbon network plane size L is determined from the following equation through use of an atomic weight of a carbon atom of 12 g/mol and a lattice constant of a graphite crystal in the a-axis direction of 0.2461 nm: L [nm]=2×1/12×0.2461/N_{edge} [mol/g]. Herein, the maximum value "L (Max) " and minimum value "L (Min) " of L are calculated using two equations described below, respectively: "L(Max) " [nm]=2×1/12×0.2461/N_{edge}(Min) [mol/g] ; and "L (Min)" [nm]=2×1/12×0.2461/N_{edge}(Max) [mol/g] .

As described above, since CO derived from the ether and CO derived from the phenolic hydroxy group cannot be distinguished, two values, that are the maximum value and the minimum value, are calculated for the average carbon network plane size L. "L(Max)" corresponds to the case in which the phenolic hydroxy group alone is present, and "L(Min)" corresponds to the case in which the ether alone is present. However, it is difficult to consider that an actual material has only one of the phenolic hydroxy group or the ether. Accordingly, the average carbon network plane size L of the carbon catalyst is defined as a median "L(av.)" of "L(Max)" and "L(Min)". "L(av.)" is obtained by dividing the sum of "L (Min)", which is obtained as the minimum value of possible values of the average carbon network plane size L, and "L(max)", which is obtained as the maximum value of the possible values, by 2. The "L(av.)" was obtained as the average carbon network plane size L of the carbon catalyst.

### [X-ray Photoelectron Spectroscopy (XPS)]

A photoelectron spectrum from inner shell levels of a carbon atom and a nitrogen atom on the surface of the carbon catalyst of each of Examples was measured with an X-ray photoelectron spectroscopy apparatus (AXIS Nova, manufactured by Kratos Analytical Ltd.). An AlKα ray (10 mA, 15 kV, Pass energy: 40 eV) was used for an X-ray source. In the resultant photoelectron spectrum, the binding energy was corrected so that the peak top of a C1s peak derived from the 1s orbital of the carbon atom was positioned at 284.5 eV.

By XPS wide scan analysis, the atom concentrations (at%) of the carbon atom and the nitrogen atom on the surface of the carbon catalyst were determined from the peak area and the detection sensitivity coefficient in the photoelectron spectrum. In addition, the N/C ratio was calculated by dividing the nitrogen atom concentration (at%) by the carbon atom concentration (at%). In the calculation of the atom concentrations (at%), the carbon catalyst was assumed to include a carbon atom, a nitrogen atom, an oxygen atom, a sulfur atom, a boron atom, a chlorine atom, and a metal atom included in the raw material for carbonization.

### [Specific Surface Area and Pore Volume]

The specific surface area and pore volume of the carbon catalyst of each of Examples were measured by a nitrogen adsorption method with a specific surface area-pore distribution measurement apparatus (BELSORP MAX, manufactured by MicrotracBEL Corp.) .

That is, first, 0.01 g of the carbon catalyst was held at 200°C and 6.7×10⁻² Pa for 2 hours so that water adsorbed on the carbon catalyst was removed. Next, a nitrogen adsorption isotherm at 77 K was obtained by a BET method. The nitrogen adsorption isotherm at 77 K was obtained by measuring a change in amount of nitrogen adsorbed on the carbon catalyst associated with a change in pressure of a nitrogen gas at a temperature of 77 K. Moreover, the BET specific surface area (m²/g) of the carbon catalyst by a nitrogen adsorption method was obtained from the nitrogen adsorption isotherm at a temperature of 77 K. In addition, from the nitrogen adsorption isotherm at a temperature of 77 K, the micropore volume (cm³/g) was obtained by an MP method, and the mesopore volume (cm³/g) was obtained by a DH method.

### [Evaluation of Catalytic Activity]

The catalytic activity of each of the carbon catalysts was evaluated with a rotating ring-disk electrode apparatus (RRDE-3A Rotating Ring-disk Electrode Apparatus ver. 1.2, manufactured by BAS Inc.) and a dual electrochemical analyzer (CHI700C, manufactured by ALS Co., Ltd.).

That is, a rotating ring-disk electrode apparatus of a three-electrode system including a working electrode including each of the carbon catalysts was first produced. Specifically, 5 mg of the carbon catalyst, 50 µL of 5% NAFION (trademark) (manufactured by Sigma-Aldrich, NAFION perfluorinated ion-exchange resin, 5% solution (product number: 510211)), 400 µL of water, and 100 µL of isopropyl alcohol were mixed to prepare a slurry. Next, the slurry was subjected to ultrasonic treatment for 10 minutes, and then subjected to homogenizer treatment for 2 minutes. Then, the resultant slurry was applied to a working electrode (ring-disk electrode for RRDE-3A, platinum ring-gold disk electrode, disk diameter: 4 mm, manufactured by BAS Inc.) so that the content of the carbon catalyst per unit area of the electrode became 0.1 mg/cm², and dried to produce a working electrode carrying the carbon catalyst.

In addition, a platinum electrode (Pt counter electrode of 23 cm, manufactured by BAS Inc.) was used as a counter electrode, and a reversible hydrogen electrode (RHE) (storage type reversible hydrogen electrode, manufactured by EC Frontier Co., Ltd.) was used as a reference electrode. Thus, a rotating ring-disk electrode apparatus including the working electrode including the carbon catalyst, the platinum electrode serving as the counter electrode, and the reversible hydrogen electrode (RHE) serving as the reference electrode, was obtained. In addition, a 0.1 M aqueous solution of perchloric acid was used as an electrolytic solution.

Moreover, the catalytic activity of each of the carbon catalysts was measured with the rotating ring-disk electrode apparatus. That is, linear sweep voltammetry (N₂-LSV) under a nitrogen atmosphere and linear sweep voltammetry (O₂-LSV) under an oxygen atmosphere were performed with the rotating ring-disk electrode apparatus of a three-electrode system including the working electrode including each of the carbon catalysts.

In N₂-LSV, nitrogen bubbling was first performed for 10 minutes to remove oxygen in the electrolytic solution. After that, the electrode was rotated at a rotation speed of 1,600 rpm, and the current density at the time of potential sweep at a sweep rate of 20 mV/sec was recorded as a function of potential (N₂-LSV).

After that, in O₂-LSV, oxygen bubbling was performed for 10 minutes, and the electrolytic solution was filled with saturated oxygen. After that, the electrode was rotated at a rotation speed of 1,600 rpm, and the current density at the time of potential sweep at a sweep rate of 20 mV/sec was recorded as a function of potential (O₂-LSV).

Then, an oxygen reduction voltammogram was obtained by subtracting N₂-LSV from O₂-LSV. In the obtained oxygen reduction voltammogram, positive and negative signs were placed before numerical values so that a reduction current had a negative value and an oxidation current had a positive value.

From the thus obtained oxygen reduction voltammogram, the voltage (oxygen reduction-starting potential EO₂) (V vs. NHE) at which a reduction current of -10 µA/cm² flowed was recorded as an indicator of the catalytic activity of each of the carbon catalysts itself.

### [Results]

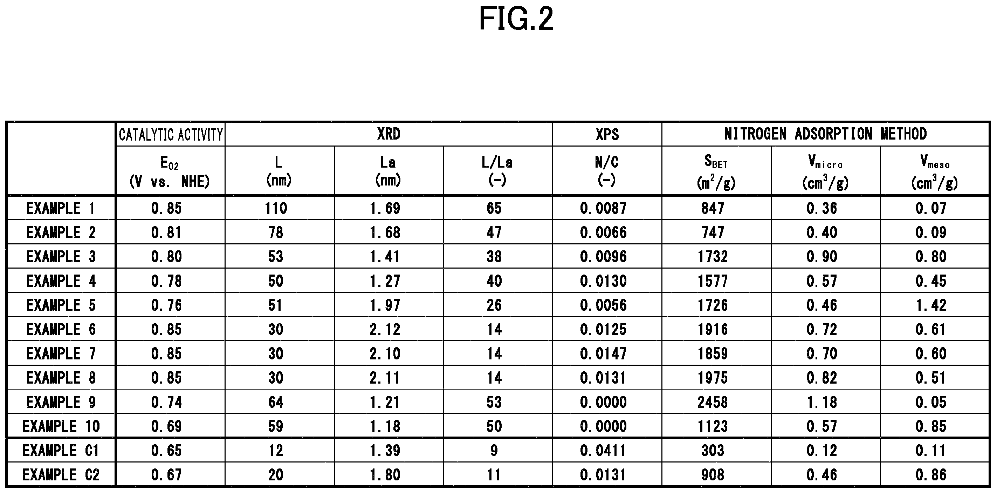

FIG. 2 shows results of evaluation of characteristics of the carbon catalysts of Examples. As shown in FIG. 2, the oxygen reduction-starting potentials EO₂ (V vs. NHE) of the carbon catalysts of Examples 1 to 10 were higher than those of the carbon catalysts of Examples C1 and C2. That is, the carbon catalysts of Examples 1 to 10 each exhibited catalytic activity higher than those of the carbon catalysts of Examples C1 and C2.

In particular, the carbon catalysts of Examples 1 to 8 each exhibited an oxygen reduction-starting potential EO₂ (V vs. NHE) higher than those of the carbon catalysts of Examples 9 and 10. That is, the carbon catalysts of Examples 1 to 8 each exhibited catalytic activity even higher than those of the carbon catalysts of Examples 9 and 10.

The ratios L/La (the ratio of the average carbon network plane size L to the crystallite size La) of the carbon catalysts of Examples 1 to 10 were larger than those of the carbon catalysts of Examples C1 and C2. The average carbon network plane sizes L of the carbon catalysts of Examples 1 to 10 were significantly larger than those of the carbon catalysts of Examples C1 and C2. On the other hand, the crystallite sizes La of the carbon catalysts of Examples 9 and 10 among Examples 1 to 10 were smaller than those of the carbon catalysts of Examples 1 to 8. The N/C ratios of the carbon catalysts of Examples 9 and 10 were zero. That is, the carbon catalysts of Examples 9 and 10 were those including no nitrogen atom.

The BET specific surface area (S_{BET}) of the carbon catalyst of Example C1 was significantly smaller than those of the carbon catalysts of the other examples. The carbon catalyst of Example 9 had a micropore volume (V_{micro}) larger than those of the carbon catalysts of the other examples. On the other hand, the carbon catalyst of Example C1 had a micropore volume (V_{micro}) significantly smaller than those of the carbon catalysts of the other examples.

## Claims

1. A carbon catalyst,
wherein the carbon catalyst has a ratio L/La of an average carbon network plane size L, which is obtained by temperature programmed desorption analysis capable of heating to 1,600°C, to a crystallite size La, which is obtained from a diffraction peak in a vicinity of a diffraction angle (2θ) of 43° in an X-ray diffraction pattern obtained by powder X-ray diffraction using a CuKα ray, of 12 or more; and
wherein the carbon catalyst has an iron content of 3,000 ppm or less.

2. The carbon catalyst according to claim 1, wherein the carbon catalyst has the crystallite size La of 10.00 nm or less.

3. The carbon catalyst according to claim 1, wherein the carbon catalyst has the average carbon network plane size L of 5 nm or more.

4. The carbon catalyst according to claim 1, wherein the carbon catalyst comprises a nitrogen atom.

5. The carbon catalyst according to claim 1, wherein the carbon catalyst has a ratio of a nitrogen atom concentration to a carbon atom concentration, which is obtained by X-ray photoelectron spectroscopy, of 0.0005 or more.

6. The carbon catalyst according to claim 1, wherein the carbon catalyst has a BET specific surface area of 100 m²/g or more.

7. The carbon catalyst according to claim 1, wherein the carbon catalyst has a micropore volume of 0.05 cm³/g or more.

8. The carbon catalyst according to claim 1, wherein the carbon catalyst has a micropore volume of 2.50 cm³/g or less.

9. The carbon catalyst according to claim 1, wherein the carbon catalyst has a mesopore volume of 0.001 cm³/g or more.

10. The carbon catalyst according to claim 1, wherein the carbon catalyst comprises a non-noble metal other than iron.

11. An electrode, comprising the carbon catalyst of any one of claims 1 to 10.

12. A battery, comprising the electrode of claim 11.
